# EUROPÄISCHE PATENTSCHRIFT

(11) **EP 2 146 193 B1**
(45) Veröffentlichungstag und Bekanntmachung des Hinweises auf die Patenterteilung: **01.08.2012**
(21) Anmeldenummer: 09008840.2
(22) Anmeldetag: 07.07.2009
(51) Int. Cl.: G01J 5/20, B61K 9/06

(54) **Einrichtung zum berührungslosen Messen der Temperatur erwärmter Bauteile an fahrenden Schienenfahrzeugen**
Device for contactless measurement of the temperature of heated components in moving railway vehicles
Dispositif de mesure sans contact de la température de composants chauffés sur des véhicules sur rails en fonctionnement

(30) Priorität: 19.07.2008 DE 102008033856
(43) Veröffentlichungstag der Anmeldung: 20.01.2010
(73) Patentinhaber: SST Signal uns System Technik GmbH, 56427 Siershahn (DE)
(72) Erfinder: Henn, Reiner, 56587 Gierend (DE)
(74) Vertreter: Seewald, Jürgen

(56) Entgegenhaltungen:
- EP-A1- 0 949 134
- KANIEWSKI J; MUSZALSKI J; PIOTROWSKI J: "Recent advances in InGaAs detector technology" PHYSICA STATUS SOLIDI C WILEY-VCH GERMANY, Nr. 9, 2004, Seiten 2281-2287, XP002546961 ISSN: 1610-1634
- 'Design, fabrication, and testing of intersubband infrared photodetectors operating at wavelengths between 2 micrometers and 17 micrometers', 31 Januar 2008, UNIVERSIT E DE NEUCHATEL Artikel FABRIZIO GIORGETTA: 'Design, fabrication, and testing of intersubband infrared photodetectors operating at wavelengths between 2 micrometers and 17 micrometers', XP055018090

## Beschreibung

Die Erfindung betrifft eine Einrichtung zum berührungslosen Messen der Temperatur erwärmter Bauteile an fahrenden Schienenfahrzeugen mit mindestens einem Infrarot-Strahlungsdetektor, der aus einem auf Heterostrukturen basierenden Halbleiter-Detektormaterial aufgebaut ist, optischen Einrichtungen zur Abbildung des Messflecks auf den Strahlungsdetektor sowie einer Einrichtung zur Bestimmung der am Messfleck herrschenden Temperatur.

Im Schienenverkehr ist der Einsatz infrarot-empfindlicher Detektoren sowie geeigneter optischer Vorrichtungen, die die Wärmestrahlung von auf den Schienenverkehrswegen vorbeifahrenden Fahrzeugen auf den jeweils zugeordneten Detektor projizieren, bekannt. Üblicherweise werden hierbei die Radsatzlager, oftmals aber auch die Radkränze oder die auf den Radsatzwellen sitzenden Bremsscheiben der vorbeifahrenden Fahrzeuge auf unzulässige Erwärmungen überprüft. Die Detektoren liefern dabei ein zur Abwärme des sensorisch zu überwachenden Bauteils proportionales elektrisches Signal, das mittels dem Detektor nachgeschalteter Verstärker weiterverarbeitet und Schwellwertschaltern zugeführt wird. Sobald der Strahlungsdetektor eine über einem vorab definierten Grenzmaß liegende Wärmeabstrahlung erfasst, spricht der Schwellwertschalter auf die dadurch hervorgerufene Signalstärke an und es erfolgt eine Alarmmeldung. Zusätzlich sind derartige Messeinrichtungen mit Gleisschaltmitteln ausgestattet, die von auf die jeweilige Messeinrichtung zufahrenden Schienenfahrzeugrädern betätigbar sind und eine bedarfsorientierte Aktivierung der Messeinrichtung ermöglichen. Derartige Anlagen werden üblicherweise als Heißläuferortungsanlagen ("HOA") bezeichnet. Sie sind an definierten Messorten im Gleisbereich entlang von Schienenverkehrswegen angeordnet und meistens in Hohl- bzw. Kastenschwellen integriert.

Einrichtungen dieser Art sind im Stand der Technik an zahlreichen Stellen beschrieben. Beispielhaft seien hierfür die EP 264 360 A2 oder die EP 457 752 A1 genannt.

Bei den in den Heißläuferortungsanlagen zum Einsatz kommenden Infrarot-Strahlungsdetektoren handelte es sich ursprünglich meist um thermische Detektoren. Die DE 28 18 241 A1 lehrt beispielsweise die Temperaturerkennung mittels eines Bolometers, bei dem die durch die elektromagnetische Strahlung hervorgerufene Wärmewirkung den ohmschen Widerstand des Sensors verändert, was in Verbindung mit einer anliegenden Spannung und einem Strommessgerät angezeigt werden kann und damit Rückschlüsse auf die Leistungsdichte der gemessenen Strahlung erlaubt. Diese thermischen Detektoren weisen jedoch ein relativ träges Zeitverhalten auf und sind für die heute üblichen Zuggeschwindigkeiten nicht mehr geeignet.

Der aktuelle Stand der Technik hingegen nutzt Photowiderstände in Form von Halbleiterdetektoren, wie z.B. HgTe, InSb oder HgCd. Detektoren dieser Art sind im Stand der Technik an zahlreichen Stellen beschrieben. Beispielhaft sei hierfür die EP 949 134 A1 genannt. Derartige Halbleiterdetektoren sprechen bei Einstrahlungsänderung durch thermische Anregung freier Ladungsträger an. Allerdings wären sie physikalisch bedingt nicht für die kontinuierliche Erfassung eines konstanten Temperaturniveaus geeignet und bedürfen daher zusätzlicher Ablenkeinrichtungen zum zyklischen Unterbrechen der einfallenden Einstrahlung bzw. Modulatoren zum zyklischen Verändern des Einstrahlungsniveaus. Alle Photowiderstände sind hinsichtlich der von ihnen detektierbaren Strahlung auf Wellenlängen bis zu 5 µm beschränkt.

Somit ist eine für den Einsatz im Schienenverkehrsbereich ausreichend hohe Messgeschwindigkeit bislang nur im nahen Infrarotbereich (0,7 µm bis 3 µm) sowie im mittleren Infrarotbereich (3 µm bis 6 µm) möglich. Da sich die maximalen Strahlungsintensitäten bei niedrigeren Temperaturen (z.B. bei einer "Raumtemperatur" von 20°C) in den langwelligen Spektralbereich von 8 µm bis 15 µm verschieben, kommen Heißläuferortungsanlagen deshalb bis zum heutigen Tage tatsächlich nur zur Detektion unzulässig erwärmter (also "heißer") Fahrzeugbauteile mit einem Spektralbereich von bis zu 6µm zum Einsatz. Es werden also nur Betriebszustände erfasst, die bereits eine kritische Temperaturgrenze überschritten haben oder nahe davor sind, diese zu überschreiten. Diese Anlagen dienen somit bislang ausschließlich dazu, Alarmmeldungen bei unzulässigen Betriebszuständen auszugeben, und kommen deshalb nur als Gefahrenmeldeanlagen zum Einsatz. Es besteht jedoch ein Bedarf, unzulässige Betriebszustände nicht erst bei Überschreiten eines relativ hoch angesiedelten Schwellwertes zu erkennen, der meist unverzügliche betriebliche Eingriffe (wie z.B. das Anhalten des Zuges und Ausrangieren des betroffenen Einzelwagens) verursacht und bei dessen Vorliegen oftmals schon eine Schädigung des erwärmten Bauteils weit vorangeschritten ist. Sondern es sollen stattdessen auch von niedrigeren Temperatur-Niveaus ausgehende Tendenzen und Schadensverlauf-Muster detektiert und einer Auswertung zum Zwecke der präventiven Wartung zuführbar sein.

In Anbetracht der Tatsache, dass die für die übrigen Einsatzbedingungen geeigneten infrarot-Strahlungsdetektoren auf den nahen bzw. mittleren Infrarotbereich eingeschränkt sind, streben die bisher aus dem Stand der Technik bekannten Lösungsansätze einen Ersatz der Infrarot-Strahlungsdetektion durch die sensorische Erfassung anderer physikalischer Größen an. So ist beispielsweise aus der DE 198 52 220 A1 bekannt, beginnende Lagerschäden über die vom Normalzustand abweichende Schwingungsemission der hiervon betroffenen Lager zu erfassen. In Anbetracht des ungünstigen schwingungsmechanischen Umfeldes mit zahlreichen potentiellen Störfaktoren bestehen jedoch erhebliche Zweifel an der Praktikabilität dieses technologischen Ansatzes. Auch sind mit diesem Lösungsansatz nur Bauteile mit einer hinreichend ausgeprägten mechanischen Eigenbewegung (z.B. Lagerpaarungen) erfassbar; eine Detektion der Temperaturentwicklung wäre damit aber bei solchen Baueilen beispielsweise nicht ohne weiteres möglich.

Kaniewski, Muszalski, Piotrowski: "Recent advances in InGaAs detector technology" (phys. Stat. Sol (a) 201, Nor. 10, 2281-2287 (2004)) offenbart eine Weiterentwicklung von InGaAs-Photodioden. Basierend auf der Tatsache, dass InₓGa₁₋ₓAs-Legierungen durch Erhöhen des In-Anteils auf eine Anwendbarkeit in Spektralbereichen bis zu 3,6 µm angehoben werden können, sind herkömmliche InGaAs-Photodioden zunächst auf einen Betriebsbereich von bis zu 3,6 µm beschränkt.

Der Erfindung liegt daher die Aufgabe zugrunde, eine Einrichtung zum berührungslosen Messen der Temperatur erwärmter Bauteile an fahrenden Schienenfahrzeugen bereitzustellen, die eine Erfassung geringerer WärmeAbstrahlungen bzw. niedrigerer Temperaturen an Fahrzeugbauteilenermöglicht und eine Alternative zum bekannten Stand der Technik bildet. Die hohen Fahrzeuggeschwindigkeiten machen eine Messfrequenz von > 1000 Hz erforderlich. Dabei sind die auch die relativ rauen Umgebungsbedingungen von Heißläuferortungsanlagen zu berücksichtigen. Insbesondere soll ein Infrarot-Strahlungsdetektor realisiert werden, der Umgebungstemperaturen von - 40°C bis +80°C erträgt, vibrationsfest und zudem auch für das einfallende Sonnenlicht weitgehend unempfindlich ist. Der Einbauraum ist durch die geometrischen Abmessungen einer Kastenschwelle im Wesentlichen vorgegeben und darf nicht überschritten werden.

Erfindungsgemäß wird diese Aufgabe in Verbindung mit dem Oberbegriff des Patentanspruches 1 dadurch gelöst, dass der Infrarot-Strahlungsdetektor als ein auf Intersubbandübergängen basierender Quantenkaskadendetektor ausgeführt ist, dessen Halbleiter-Detektormaterialaus den Legierungsschichten In_{0,53}Ga_{0,47}As In_{0,52}Al_{0,48}As aufgebaut ist, sowie mit einem Peltier-Element verbunden ist. Die hierbei verwendeten Halbleiter sind in Heterostrukturen, also aus Schichten unterschiedlichen Materials und unterschiedlicher Schichtstärken aufgebaut, die jeweils gemeinsame Grenzschichten ausbilden. Dabei laufen die Wechselwirkungen zwischen Photonen und Elektronen ausschließlich zwischen quantisierten "Subbändern" im Leitungsband dieser Heterostruktur ab. Mittels des Peltier-Elementes, welches ggf. mehrstufig ausgeführt ist, wird dieser Infrarot-Strahlungsdetektor auf eine Temperatur von circa 0°C abgekühlt.

Der erfindungsgemäße Infrarot-Strahlungsdetektor erweitert im Vergleich zum bislang bekannten Stand der Technik das Spektrum der erfassbaren Bauteil-Temperaturen nach unten bis zu einer Temperatur von circa 0°C und ermöglicht somit erstmals auch eine messtechnische Erfassung kalter bzw. nur minimal erwärmter Bauteile. Dies ist die messtechnische Grundlage für eine Früherkennung sich langsam entwickelnder potentieller Fehler, die auf einem direkten Vergleich zwischen den beiden Achslagern eines Radsatzes beruht. Eine mit erfindungsgemäßen Infrarot-Strahlungsdetektoren ausgerüstete Heißläufer-Ortungsanlage erkennt immer dann auf Vorliegen eines sich bei einem aktuell überprüften Radsatz entwicklenden Fehlerzustandes, wenn der Vergleich der Wärmeabstrahlungen bzw. Temperaturen der beiden Achslager einen voreinstellbaren Toleranz- bzw. Schwellwert überschreitet (beispielsweise wenn eines der beiden Achslager "kalt", das andere hingegen "leicht erwärmt" ist).

Ein derartiges Halbleiter-System hat sich als besonders vorteilhaft herausgestellt, da es die Detektion von Strahlungen eines Spektrums von Wellenlängen im Bereich von 4,5 µm bis 17 µm ermöglicht. Damit können auch niedrigere Temperaturen größerer Wellenlänge genau erfasst werden. Ein solches Detektormaterial weist auch eine hohe Empfindlichkeit auf, wodurch das Rauschen der Messung herabgesetzt wird. Zusätzlich ist die Anfälligkeit des erfindungsgemäßen Infrarot-Strahlungsdetektors gegenüber Fehlalarmen, die durch Reflexionen des Sonnenlichts hervorgerufen werden, minimiert, da die natürliche Strahlung der Sonne im Spektralbereich zwischen 8 µm und 17 µm ein Minimum aufweist.

Die vorliegende Erfindung wird nachstehend anhand eines Ausführungsbeispiels und einer dazu gehörigen Zeichnung näher erläutert. Es zeigt:

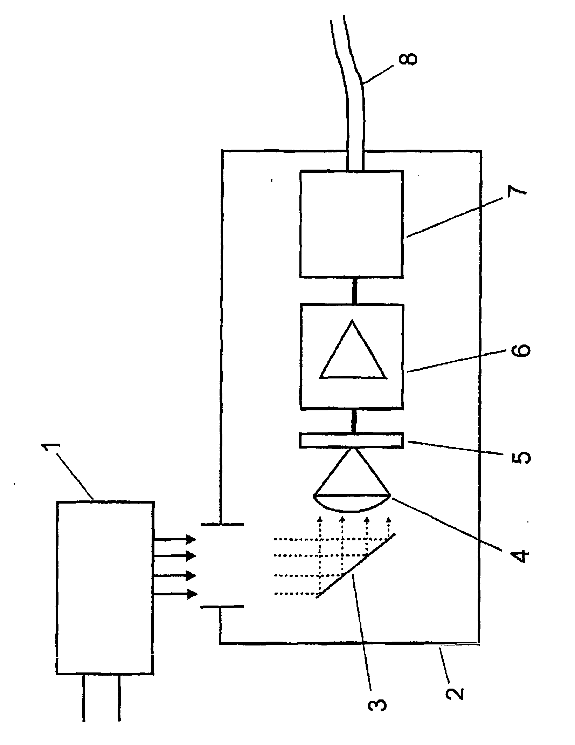

- Fig. 1: schematischer Aufbau einer erfindungsgemäßen Einrichtung zur Temperaturmessung

Die Messeinrichtung umfasst ein Sensorgehäuse 2, das eine Einfallöffnung zum Durchlass der die vom messtechnisch zu überprüfenden Bauteil 1 eines Schienenfahrzeuges ausgehende Wärmestrahlung aufweist. Bei diesem zu überprüfenden Bauteil kann es sich beispielsweise um ein Achslager eines Schienenfahrzeuges handeln. Das Sensorgehäuse 2 ist so im Gleisbereich einer Schienenverkehrsstrecke angeordnet, dass es die Achslager von vorbeifahrenden Fahrzeugen ungehindert erfassen kann, d.h. es muss ein ungehinderter Strahlungsgang zwischen Bauteil 1 und Detektor möglich sein, der nicht durch andere hineinragende Bauteile ganz oder teilweise verdeckt wird. Zugleich muss das Sensorgehäuse 2 außerhalb des Lichtraum-Profils der Schienenverkehrsstrecke angeordnet sein. Üblicherweise werden derartige Sensoren daher z.B. in Hohlkastenschwellen eingebaut, die - analog zu den herkömmlichen Schwellen - in den Gleisrost der Schienenstrecke integrierbar sind. Es ist aber auch möglich, das Sensorgehäuse 2 auf Standardschwellen oder an die Schiene anzubringen.

Ein solches Achslager erfährt im täglichen Betriebseinsatz bedingt durch die Rollreibung eine betriebsabhängige Erwärmung. Das heißt also, dass die Erwärmung zunächst in erster Linie in Abhängigkeit von Fahrzeuggeschwindigkeit und Achslast ausfällt. Allerdings beeinflusst auch der technische Zustand des Achslagers die Erwärmung. Defekte Wälzkörper, mangelhafte Schmierung etc. beeinflussen negativ die Reibungsverhältnisse innerhalb des Lagers. Das Lagergehäuse gibt diese innere Erwärmung des Lagers in Form von Infrarotstrahlung an die Umgebung ab. Diese Infrarotstrahlung kann sensorisch erfasst und messtechnisch ausgewertet werden.

Über eine optionale Umlenkeinheit (3) wird die Infrarot-Strahlung zu einer Optik (4) geleitet, die das thermische Abbild des Achslagers auf den Detektor (5) fokussiert. Bei diesem Detektor handelt es sich erfindungsgemäß um einen photovoltaischen Infrarotdetektor, der auf Intersubbandübergängen basiert. Derartige Detektoren werden bisweilen auch als "quantum cascade detector" (QCD) bezeichnet. Der Betrieb eines solchen erfindungsgemäßen Detektors kann bei Umgebungstemperatur erfolgen.

Unter Zwischenschaltung einer Verstärkereinheit (6) werden die messtechnische erfassten Signale einer Steuerungselektronik (7) zugeführt. Diese digitalisiert die gewonnenen Daten, berechnet hieraus Temperaturwerte, führt Differenzbildungen bzw. Vergleiche zwischen den Meßsignalen der beiden Achslager eines Radsatzes durch und komprimiert die hieraus gewonnen Daten zur Übertragung an eine nachgelagerte Auswerteeinheit, die nicht Bestandteil der hier dargestellten Einrichtung ist. Diese Auswerteeinheit ist in an sich bekannter Weise mit Leitstellen zur Verkehrssteuerung verbunden, an die es - basierend auf den Messergebnissen - eventuelle Alarm- oder Wartungsmeldungen überträgt.

### Bezugszeichenliste

- 1: Achslager
- 2: Sensorgehäuse
- 3: Strahlungsumlenker
- 4: Optik
- 5: Detektor
- 6: Verstärkereinheit
- 7: Steuerungselektronik
- 8: Datenübertragungsmittel

## Patentansprüche

1. Einrichtung zum berührungslosen Messen der Temperatur erwärmter Bauteile an fahrenden Schienenfahrzeugen mit mindestens einem Infrarot-Strahlungsdetektor, der aus einem auf Heterostrukturen basierenden Halbleiter-Detektormaterial aufgebaut ist, optischen Einrichtungen (3, 4) zur Abbildung des Messflecks auf den Strahlungsdetektor (5) sowie einer Einrichtung zur Bestimmung der am Messfleck herrschenden Temperatur bis nach unten zu einer Temperatur von ca. 0°C, wobei der Infrarot-Strahlungsdetektor als ein auf Intersubbandübergängen basierender Quantenkaskadendetektor ausgeführt ist, dessen Halbleiter-Detektormaterial aus den Legierungsschichten In0,53Ga0,47As / In0,52Al0,48As aufgebaut ist, sowie mit einem Peltier-Element verbunden ist.

## Claims

1. Device for contactless measurement of the temperature of heated components in moving railway vehicles with at least one infrared radiation detector, which is constructed from a semiconductor detector material based on heterostructures, optical devices (3, 4) for projecting the measuring spot onto the radiation detector (5) and a device for determining the temperature prevailing at the measuring spot down to a temperature of approx. 0°C, wherein the infrared radiation detector is executed as a quantum cascade detector based on intersubband transitions, the semiconductor detector material of which detector is constructed from the alloy layers InO, 53GaO, 47As / InO,52AlO,48As, and is connected to a Peltier element.

## Revendications

1. Dispositif de mesure sans contact de la température d'éléments échauffés de véhicules ferroviaires se déplaçant avec au moins un détecteur de rayonnement infrarouge qui est confectionné en un matériau détecteur semiconducteur basé sur des hétérostructures, des dispositifs optiques (3, 4) pour représenter le point de mesure sur le détecteur de rayonnement (5), ainsi qu'un dispositif de détermination de la température régnant au point de mesure jusqu'à une température basse d'environ 0°C, le détecteur de rayonnement infrarouge étant conçu comme détecteur à cascades quantiques basé sur des transitions entre sous-bandes, dont le matériau détecteur semiconducteur est confectionné à partir des couches d'alliages InO,53GaO,47As / In0,52Al0,48As et relié à un élément de Peltier.
